# DEMANDE DE BREVET EUROPEEN

(11) **EP 2 374 648 A2**
(43) Date de publication de la demande: **12.10.2011**
(21) Numéro de dépôt: 11156470.4
(22) Date de dépôt: 01.03.2011
(51) Int. Cl.: B60K 7/00, B60G 7/00

(54) **Ensemble motopropulseur**

(30) Priorité: 06.04.2010 FR 1052571
(71) Demandeur: Akka Ingenierie Produit, 92300 Levallois-Perret (FR)
(72) Inventeur: Ricci, Maurice, 69002 Lyon (FR); Debout, Thierry, 92600 Asnières (FR); Robbe, Vincent, 92500 Rueil Malmaison (FR)
(74) Mandataire: Gaillarde, Frédéric F. Ch.

(57) **Abrégé**

L'invention concerne un ensemble motopropulseur (100) comprenant une machine électrique tournante (101) destinée à entraîner une roue (3,4) d'un véhicule et un carter moteur (300) destiné à loger ladite machine (101) caractérisé en ce que le carter moteur (300) est adapté pour former un bras de suspension de ladite roue correspondante, mobile en rotation autour d'un axe parallèle et distinct de l'axe de rotation dudit rotor

## Description

L'invention concerne le domaine des ensembles motopropulseurs de véhicules.

L'invention trouve une application particulière avantageuse dans le domaine des véhicules de type tout électrique ou de type hybride combinant l'utilisation d'une machine électrique et d'un moteur thermique à combustion interne.

Dans de tels véhicules, au moins une machine électrique tournante qui est susceptible de fonctionner en moteur ou bien en générateur peut participer à la traction du véhicule, notamment en milieu urbain pour lequel une absence totale d'émissions polluantes du véhicule est recherchée.

De manière conventionnelle, la machine électrique tournante est alimentée par une batterie d'accumulateurs.

Par ailleurs, l'enrichissement des fonctionnalités des véhicules et la conversion à l'électricité de nombreux organes mécaniques ont fait apparaître de nouveaux organes de forte puissance électrique, nécessitant également une alimentation électrique.

Un problème récurrent dans les véhicules comprenant une alimentation électrique est la faible autonomie des batteries.

Ce problème d'autonomie de la batterie est d'autant plus gênant que la distance à parcourir par le véhicule est grande.

Diverses solutions pour résoudre ce problème ont déjà été proposées.

C'est ainsi, par exemple, qu'on a envisagé d'intégrer au réseau d'alimentation électrique plusieurs batteries ou un système équivalent de type capacitif.

On a également proposé d'augmenter la puissance des batteries.

Or ces batteries présentent un fort encombrement et un poids important, ce qui rend leur utilisation limitée compte tenu des contraintes d'encombrement à respecter de tels véhicules.

Ces solutions augmentent également le poids du véhicule.

Or, on constate que la masse globale du véhicule influe sur la consommation d'énergie électrique de part les forces résistantes qu'elle apporte, ce qui affecte l'autonomie des batteries du réseau d'alimentation électrique.

Il est donc nécessaire de trouver des solutions pour diminuer la masse globale d'un véhicule.

Un autre but de la présente invention est de proposer un ensemble motopropulseur permettant d'optimiser la gestion de l'énergie du véhicule.

Il est également désirable d'offrir un ensemble motopropulseur permettant de diminuer la masse du véhicule tout en conservant une grande autonomie énergétique.

Un autre but de la présente invention est de proposer un ensemble motopropulseur dont l'encombrement est limité et dont le montage et la mise en oeuvre est relativement simple.

A cet effet, on prévoit selon l'invention un ensemble motopropulseur comprenant une machine électrique tournante destinée à entraîner une roue d'un véhicule et un carter moteur destiné à loger ladite machine remarquable en ce que le carter moteur est adapté pour former un bras de suspension de ladite roue correspondante.

Grace à la présente invention, on diminue le poids d'un véhicule ainsi que l'encombrement des pièces liées à l'entraînement des roues du véhicule.

Selon des modes particuliers de réalisation de l'invention, l'ensemble motopropulseur selon l'invention peut comprendre une ou plusieurs des caractéristiques suivantes, prises isolément ou en combinaison techniquement possibles :
- le carter moteur comprend des moyens d'articulation destinés à coopérer avec une tige solidaire d'un châssis du véhicule pour assurer le débattement de la roue ;
- les moyens d'articulation comprennent au moins un bras d'articulation présentant un orifice traversant capable de recevoir ladite tige ;
- le carter moteur est conformé de sorte à offrir des moyens de fixation à un système d'amortissement associé à ladite roue ;
- le carter moteur comprend une ou plusieurs oreilles de fixation comprenant un orifice traversant destiné à recevoir un élément de fixation avec un amortisseur ;
- le carter moteur comprend des moyens de fixation à une barre anti devers ;
- l'ensemble motopropulseur comprend, en outre, un carter de réduction pour loger un réducteur, ledit carter de moteur étant adapté pour être fixé audit carter de réduction ;
- le carter de réduction forme un porte moyeu ;
- l'ensemble motopropulseur comprend, en outre, un connecteur triphasé, le carter moteur étant conformé de sorte à se fixer audit connecteur ;
- le carter moteur comprend des moyens de fixation de moyens d'entraînement d'une barre anti devers ;
- l'ensemble motopropulseur comprend, en outre, un frein de parking et un moyen d'actionnement dudit frein logés dans le carter du moteur.

L'invention concerne également un ensemble comprenant un châssis et un essieu monté sur le châssis, ledit essieu comprenant un ensemble motopropulseur tel que précité et au moins une roue destinée à être entraînée par ledit ensemble motopropulseur, le carter moteur étant monté pivotant sur le châssis du véhicule autour d'un axe de rotation parallèle et distinct de l'axe de rotation de la roue.

Selon des modes particuliers de réalisation de l'invention, l'ensemble selon l'invention peut comprendre une ou plusieurs des caractéristiques suivantes, prises isolément ou en combinaison techniquement possibles :
- la machine électrique tournante est en prise directe avec la roue ;
- chaque roue est associée à un ensemble motopropulseur indépendant ;
- un système de refroidissement à air est monté sur le carter moteur ;
- le système de refroidissement comprend des moyens d'entrée d'air de refroidissement, une série d'ailettes de refroidissement configurées de sorte de diriger l'air de refroidissement entrant transversalement au rotor de la machine électrique tournante et des moyens de sortie d'air chaud du système de refroidissement.

L'invention concerne également un véhicule comprenant un ensemble motopropulseur tel que précité.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
- la figure 1 représente une vue en perspective avant d'un châssis de véhicule comprenant un ensemble motopropulseur selon un mode de réalisation de la présente invention ;
- la figure 2 représente une vue de dessous du châssis représenté sur la figure 1 ;
- la figure 3 représente, selon une vue de perspective, l'ensemble motopropulseur de la figure 1 ;
- la figure 4, qui comprend les figures 4(a) et 4(b), représente, sur la figure 4(a) une vue de côté de l'ensemble motopropulseur représenté sur la figure 3 et, sur la figure 4(b), une vue du côté opposé de l'ensemble motopropulseur représenté sur la figure 3 ;
- la figure 5 représente, selon une vue en perspective éclatée, l'ensemble motopropulseur représenté sur la figure 3 ;
- la figure 6, qui comprend les figures 6(a) et 6(b), représente, selon deux vues latérales opposées, en perspective, un carter du moteur de l'ensemble motopropulseur représenté sur la figure 3 ;
- la figure 7 représente selon une vue en perspective, le carter d'un réducteur associé au moteur de l'ensemble motopropulseur représenté sur la figure 3, le réducteur étant situé à côté du moteur ;
- la figure 8 représente, selon une vue en perspective, le carter d'un actionneur de frein de parking associé au moteur de l'ensemble motopropulseur représenté sur la figure 3 ;
- la figure 9 représente, selon une vue en perspective, un mode de réalisation d'un moteur associé à un réducteur, un frein de parking et son actionneur de l'ensemble motopropulseur représenté sur la figure 3 ;
- la figure 10 représente, selon une vue de côté partielle, les différents éléments représentés sur la figure 9, le frein de parking et une partie du moteur ayant été retirés;
- la figure 11 représente, selon une vue de perspective, l'ensemble motopropulseur de la figure 1, muni d'un système de refroidissement ;
- la figure 12 est une vue en perspective du système de refroidissement de la figure 11 ;
- la figure 13 est une vue en perspective éclatée du système de refroidissement de la figure 12.

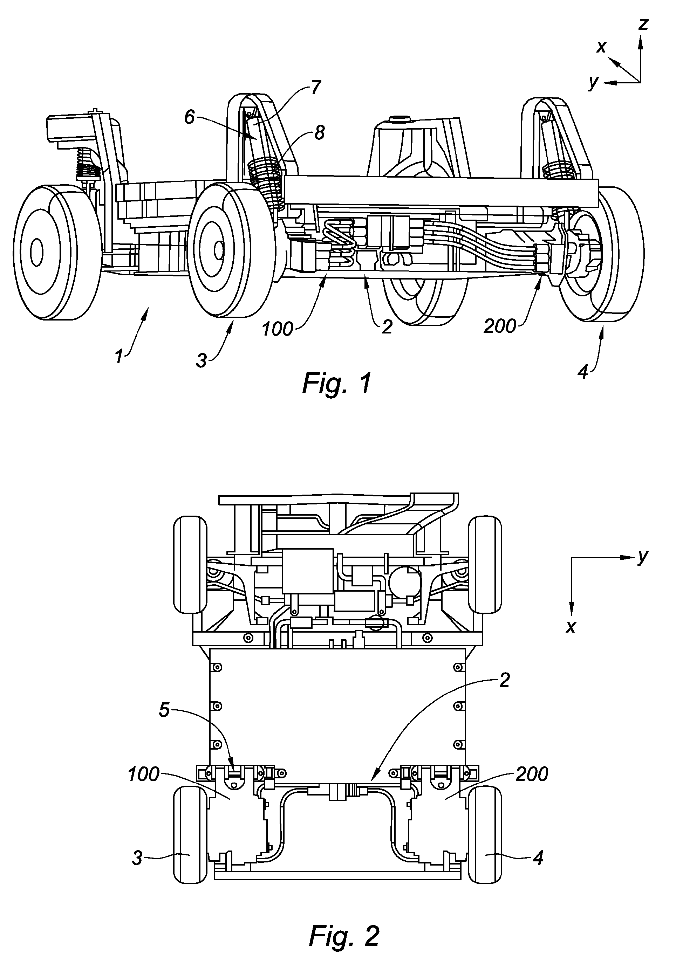

Sur les figures 1 et 2, on définit un système d'axes X, Y, Z attaché au véhicule. De façon conventionnelle, l'axe X représente l'axe longitudinal de roulement du véhicule orienté d'arrière en avant, l'axe Y représente l'axe transversal du véhicule orienté de droite à gauche, et l'axe Z représente l'axe vertical du véhicule orienté de bas en haut.

Sur la figure 1, on observe un véhicule dont le châssis 1 et plus précisément l'essieu arrière 2 est équipé d'un ensemble motopropulseur désigné par la référence 100 pour au moins une roue arrière 3 ou 4.

Avantageusement, chaque roue arrière 3, 4 mobile en rotation suivant Y, sera respectivement munie d'un ensemble motopropulseur 100, 200 dédié, de préférence identique.

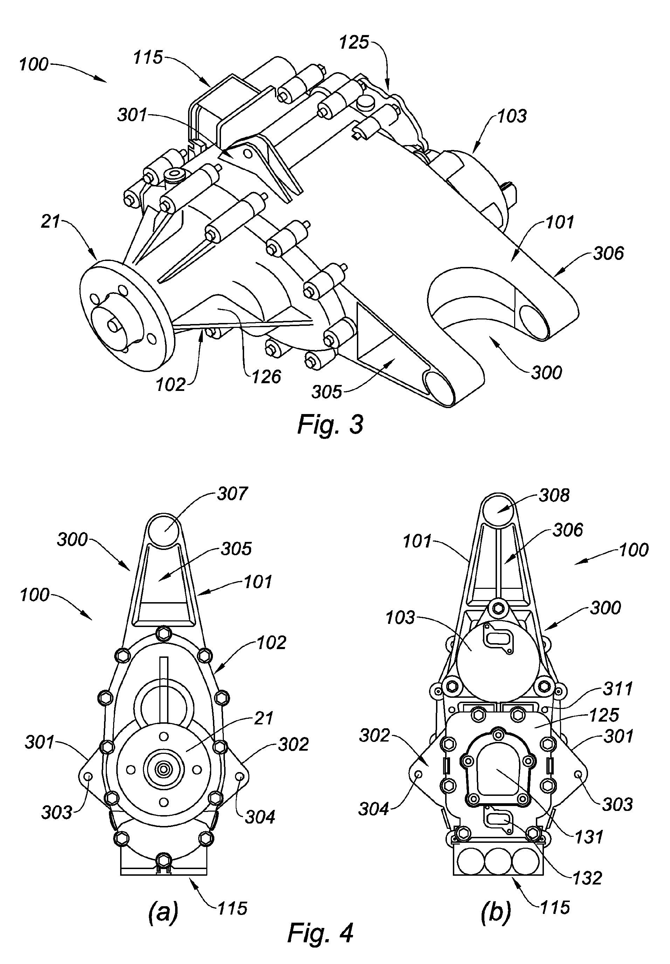

Un ensemble motopropulseur 100 conforme à l'invention est décrit plus précisément par la suite à l'appui des figures 3 à 10.

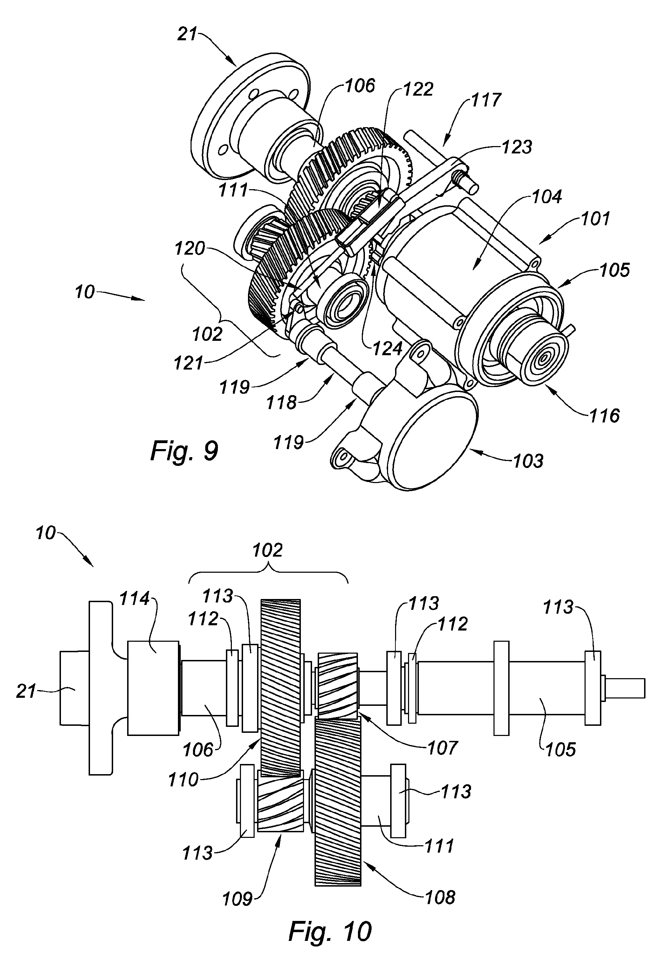

En référence notamment à la figure 3, cet ensemble motopropulseur 100 comprend principalement un moteur 101 (visible plus précisément sur la figure 9) logé dans un carter moteur 300.

Généralement, cet ensemble motopropulseur 100 comprend également un réducteur 102, reliant le moteur 101 et son carter 300 au moyeu 21 d'une roue arrière 3,4 du véhicule.

Il est à noter que d'autres types de mécanisme de transmission de rotation peuvent être prévus sans sortir du cadre de la présente invention.

Tel qu'illustré sur la figure 2, chaque ensemble motopropulseur 100 s'étend longitudinalement selon l'axe X, tout comme le carter 300 du moteur 101.

Avantageusement, le carter 300 du moteur 101 est conformé de sorte à ce qu'un système de suspension 6 puisse être monté et fixé dessus.

Dans un exemple non limitatif de la présente invention, un tel système de suspension 6 comprend un amortisseur 7 et un ressort de suspension 8 disposés concentriquement et s'étendant dans le plan XZ.

Le ressort de suspension 8 absorbe les inégalités de la route et limite les mouvements du châssis 1 pour assurer une bonne tenue de route tandis que l'amortisseur 7 absorbe de l'énergie lors de mouvements relatifs de chaque roue 3,4 par rapport au châssis 1 pour freiner l'oscillation du ressort 8 correspondant.

Le système de suspension 6 n'est pas limité à celui décrit mais peut comprendre tout moyen d'amortissement, notamment pour réaliser une suspension active, par exemple.

Plus précisément, tel qu'illustré sur les figures 3, 4a, 4b, 6a et 6b, le carter 300 comporte sur au moins l'un de ses côtés perpendiculaire à l'axe Z lorsque l'ensemble motopropulseur 100 est mis en place sur le châssis 1, une oreille de fixation 301, 302 du système de suspension 6, en l'occurrence de forme triangulaire.

Cette oreille de fixation 301, 302 est munie d'un orifice traversant respectif 303, 304 afin d'y insérer un moyen de fixation (non illustré) avec l'amortisseur 7.

Généralement, une oreille 301, 302 de ce type sera prévue de chaque côté du carter 300, même si une seule oreille 301,302 est en réalité utile pour attacher la suspension 6 au carter 300 du moteur 101.

En effet, le carter 300 présente généralement une forme symétrique afin de pouvoir être installé indifféremment du côté gauche ou droit du véhicule, ce qui limiter les coûts de fabrication.

Incidemment, on notera que le carter 300 du moteur 101 permet de reprendre les efforts du ressort de suspension 8.

Il est à noter que ces oreilles de fixation 301,302 de peuvent être venues de moulage avec le carter 300 du moteur 101 ou fixées par des moyens de fixation adaptés tels que des moyens de vissage.

Par ailleurs, avantageusement, le carter 300 du moteur 101 est adapté pour former un bras de suspension sur lequel est fixé le système d'amortissement 7,8 associé.

Tel qu'illustré sur les figures 2, 3, 4a, 4b notamment, le carter 300 comprend ainsi deux bras d'articulation 305, 306 parallèles s'étendant suivant l'axe X lorsque l'ensemble motopropulseur 100 est mis en place sur le châssis 1.

Ils présentent, chacun, au niveau de leur extrémité un orifice 307, 308 capable de recevoir une tige 5 montée sur le châssis 1 du véhicule et solidaire du châssis 1.

La tige 5 est, par exemple, représentée sur la figure 2, laquelle représente une vue de dessous du châssis 1 du véhicule.

La tige 5 s'étend selon Y, en parallèle de l'axe de rotation de la roue 3,4 associée au carter 300.

Ainsi, le carter 300 du moteur 101 est mobile en rotation autour de la tige 5 permettant le débattement de la roue 3,4 correspondante.

Plus précisément, le carter du moteur 101 est adapté pour former un bras de suspension de ladite roue correspondante, ce carter 300 étant mobile en rotation autour d'un axe parallèle et distinct de l'axe de rotation du rotor du moteur 101 correspondant.

La longueur de ces bras d'articulation 305, 306 permet de définir un bras de levier pour le déplacement du moteur 101 dans sa fonction de bras de suspension, à savoir pour assurer le débattement de la roue.

Le carter 300 du moteur 101 présente donc également une fonction de bras de suspension permettant de relier mécaniquement les masses suspendues du véhicule (châssis 1, caisse du véhicule) aux masses non suspendues (roue 3,4, système de suspension 6,,moteur 101)

Ce carter 300 est de type à bras tiré dans la mesure où l'articulation du bras en faite vers l'avant dans le sens d'avancement du véhicule tandis que la roue 3,4 correspondante est montée plus en arrière du carter 300 du moteur 101 par l'intermédiaire du réducteur 102.

Par ailleurs, comme illustré notamment sur la figure 4b, le carter 300 du moteur 101 est conformé de façon à offrir un élément de fixation 311 à un moyen d'entraînement de type bielle d'une barre anti devers (non illustrée) du système de suspension 6.

Concernant le moteur 101, il s'agit d'une machine électrique tournante du commerce et notamment, par exemple de type synchrone triphasé à aimants permanents.

Il réalise plusieurs fonctions, à savoir l'entraînement en rotation de la roue 3,4 correspondante, le freinage de cette roue 3,4 ainsi que la fourniture d'énergie électrique lorsqu'il n'est pas en fonctionnement moteur.

Il se compose d'un stator 104 et d'un rotor 105 entouré par le stator 104, comme représenté sur la figure 9.

La conception de ce moteur électrique 101 est classique et n'est donc décrite de façon plus détaillée.

Ce moteur électrique 101 est relié au réducteur 102.

Ce réducteur 102 comprend, ainsi, un carter de réduction 126 illustré sur les figures 3, 5 et 7 destiné à être fixé sur le carter 300 du moteur 101.

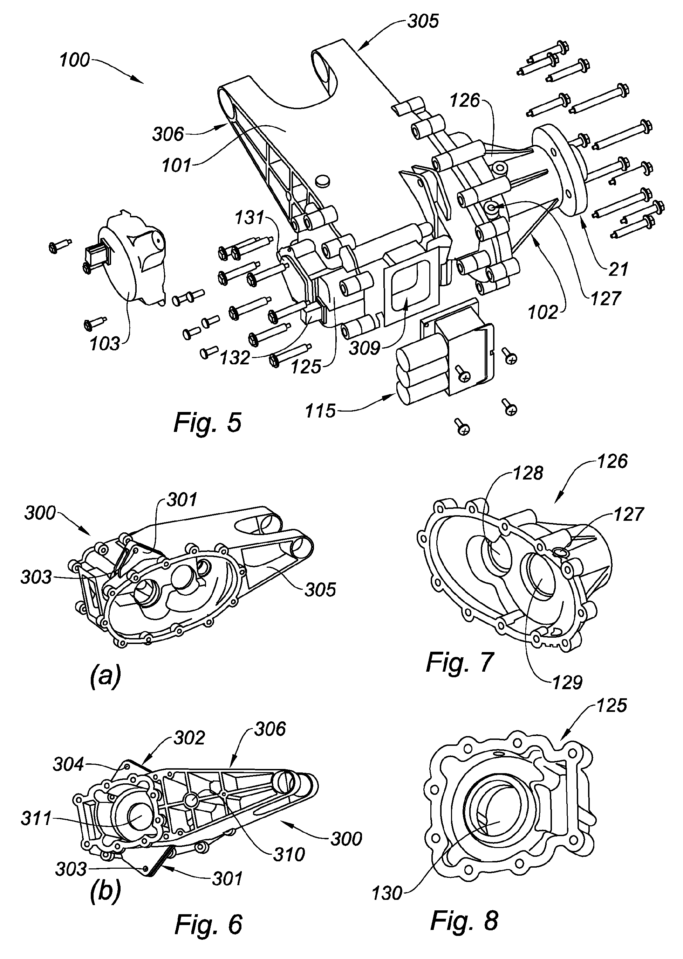

Dans un exemple non limitatif, le carter de réduction 126 est fixé sur le carter moteur 300 grâce à des moyens de vissage, comme illustré sur la figure 5.

Le carter de réduction 126 et le carter 300 moteur 101 coopèrent pour former un logement au mécanisme de réduction du réducteur 102.

Comme illustré sur les figures 9 et 10, concernant le mécanisme de réduction du réducteur 102, le rotor 105 forme un arbre primaire pour le réducteur 102.

Le mécanisme de réduction comprend, en outre, un arbre de sortie 106 sur lequel est monté le moyeu 21 de la roue correspondante 3,4.

L'arbre de sortie 106 et l'arbre primaire 105 sont placés dans le prolongement l'un de l'autre selon un axe parallèle à l'axe Y, ce qui implique que l'arbre primaire 105 à savoir le rotor 105 du moteur est disposé au plus près de la roue, dans le prolongement du porte moyeu 106.

Le moteur 101 est, par conséquent, une masse non suspendue du véhicule.

L'arbre de sortie 106 assure la fonction de porte moyeu 21 définissant l'axe de rotation du moyeu 21, comme on le verra plus loin.

L'arbre de sortie 106 transmet un mouvement de rotation de la roue 3, 4 autour d'un axe parallèle à l'axe Y via le moyeu 21 avec un rapport de démultiplication déterminé.

Pour cela, dans une première variante de réalisation, le lien mécanique entre l'arbre primaire du rotor 105 et l'arbre de sortie 106 du réducteur 102 peut s'effectuer par l'intermédiaire d'une cascade d'engrenages 107, 108, 109, 110 afin d'obtenir la réduction de vitesse angulaire souhaitée entre les deux arbres 105, 106.

Pour des raisons d'encombrement, on peut disposer certains pignons 108, 109 sur un axe secondaire 111 parallèle à l'axe primaire 105 du réducteur 102.

On a ainsi un réducteur 102 à deux étages de réduction.

Afin d'assurer le bon fonctionnement des engrenages 107, 108, 109, 110, le carter de réduction 126 peut comprendre de l'huile ou tout autre moyen exerçant la même fonction.

Un orifice de vidange 127 est prévu dans le carter 126 du réducteur 102, comme représenté par exemple sur les figures 5 et 7.

En seconde variante, le lien mécanique entre l'arbre primaire 105 et l'arbre de sortie 106 du réducteur 102 peut s'effectuer directement. Dans ce cas, l'arbre 106 de sortie est entraîné en rotation directement par l'arbre primaire 105, si bien qu'ils tournent à la même vitesse angulaire.

Avantageusement, le moteur 101 est ainsi en prise directe avec le réducteur 102 et la roue 3,4 correspondante.

On observe également sur cette même figure 7 que le carter de réduction 126 comprend dans sa concavité deux logements 128,129 adjacents adaptés respectivement pour recevoir l'arbre secondaire 111 et la partie comprenant l'arbre de sortie 106 et les engrenages du réducteur 102.

On notera que, pour des questions d'étanchéité, des joints 112, par exemple des joints à lèvres, sont prévus à différents endroits sur l'arbre primaire 105, l'arbre secondaire 111 et l'arbre de sortie 106 du réducteur 102.

Par ailleurs, ces arbres sont montés sur des roulements 113, 114 permettant d'assurer leur guidage en rotation.

L'un 114 de ces roulements, monté sur l'arbre de sortie 106 du réducteur 102 à proximité du moyeu 21 forme le roulement de la roue 2.

Aucun porte-moyeu n'est donc nécessaire, ce qui permet de supprimer une pièce et de participer à la réduction de la masse du véhicule.

Par ailleurs, l'alimentation en courant du moteur 101 électrique est réalisée par des batteries (non représentées) reliées au moteur 101 par un onduleur (non représenté).

La connexion entre les batteries et l'ensemble motopropulseur 100 s'effectue par l'intermédiaire d'un connecteur 115 triphasé, par exemple représenté sur les figures 3 et 5.

Ainsi, le carter 300 du moteur est conformé de sorte à offrir une zone de fixation audit connecteur 115.

Comme illustré sur la figure 5, il comprend une ouverture 309 de section rectangulaire destinée à coopérer avec une face correspondante complémentaire du connecteur 115 triphasé.

Dans un exemple non limitatif de la présente invention, le connecteur 115 est fixé sur le carter moteur 300 grâce à des moyens de vissage, comme illustré sur la figure 5.

Par ailleurs, comme illustré sur la figure 9, un capteur de vitesse 116 peut être prévu au niveau de l'une des extrémités de l'arbre primaire 105 du réducteur 102.

Ce capteur de vitesse 116 permet de connaître la vitesse de rotation du rotor 105 et, par suite, la vitesse de rotation de la roue 2, compte tenu de la réduction apportée par le réducteur 102.

Comme illustré sur la figure 5, il est protégé par un capot 125 fixé sur le carter 300 du moteur 101. Ce capot 125 est représenté seul selon une vue de perspective sur la figure 8.

Il comprend un orifice central ouvert 130 pour le passage du capteur de vitesse 116, cet orifice 130 étant fermé par un clapet d'accès 131 adapté illustré notamment sur la figure 5.

Un connecteur 132 pour déterminer la température du résolveur du capteur de vitesse 116 est, en outre, monté sur le capot 125.

Dans un exemple non limitatif de la présente invention, le capot 25 est fixé sur le carter moteur 300 grâce à des moyens de vissage, comme illustré sur la figure 5, le carter 300 du moteur 101 comprenant un logement 311 de forme et de dimensions adaptées pour offrir un passage au capteur de vitesse 116.

En référence aux figures 3, 4b, 5 et 9, un moyen d'actionnement 103 pour un frein de parking 117 peut également être prévu.

Le moyen d'actionnement 103 du frein 117 peut comprendre un axe de commande 118, aux extrémités duquel se trouvent des paliers 119 de roulement pour guider l'axe 118 en rotation.

Cet axe de commande 118 est monté sur une tringle 120 du frein 117, selon une liaison d'encastrement assurée par un levier 121, présentant par exemple une forme triangulaire.

La tringle 120 est solidaire d'un chariot 122 du frein 117, ce chariot 122 étant quant à lui également solidaire d'un doigt cranté 123 susceptible de bloquer une roue crantée 124 montée rigide sur l'arbre primaire du rotor 105.

Lorsque le frein 117 bloque la roue crantée 124, aucune rotation de l'arbre primaire du rotor 105 n'est donc possible et par suite, aucune rotation de la roue 2 n'est possible.

L'engagement du frein de parking 117 s'effectue par la rotation, dans un sens prédéfini, de l'axe de commande 118.

En effet, lors de sa rotation, l'axe 118 déplace en translation le chariot 122. Le chariot étant relié au doigt cranté 123, il modifie la position du doigt 123 qui vient alors s'engager avec la roue crantée 124.

Pour enlever le frein de parking 117, le moyen d'actionnement 103 fait tourner l'axe de commande 118 dans le sens opposé.

Le moyen d'actionnement 103 peut être un moteur électrique, également alimenté par les batteries, et dont la commande pourra s'effectuer par un bouton situé dans l'habitacle du véhicule, à proximité de l'utilisateur du véhicule.

Ce moyen d'actionnement 103 est fixé au carter moteur 300 dans le prolongement du capot 125 du capteur de vitesse 116, le carter 300 du moteur 101 comprenant dans sa concavité, sur le coté correspondant, un logement 310 de forme et de dimensions adaptées pour recevoir notamment l'axe de commande 118 de ce moyen d'actionnement 103, comme illustré sur la figure 6b.

Dans un exemple non limitatif de la présente invention, ce moyen d'actionnement 103 est fixé sur le carter moteur 300 grâce à des moyens de vissage, comme illustré sur la figure 5.

L'ensemble motopropulseur 100 selon l'invention pourrait également intégrer un system ABS (pour « Anti-Block System » selon la terminologie anglo-saxonne).

Le freinage est par ailleurs assuré par le moteur 101 lui-même comme indiqué précédemment, par inversion du sens de rotation du moteur électrique 101.

Aucun moyen mécanique de type tambour ou étrier de frein/plaquette n'est mis en oeuvre. Cela permet de limiter la masse de l'ensemble motopropulseur 100.

Pour participer également à réduire la masse de l'ensemble motopropulseur 100, les différentes pièces de l'ensemble 100, en particulier les différents carters, peuvent être réalisées en aluminium, de préférence avec une nuance élevée.

Un ensemble motopropulseur 100 tel que décrit précédemment peut être affecté à la propulsion de chacune des roues du véhicule, ceci de façon indépendante les uns des autres.

Pour un véhicule automobile à quatre roues, l'installation d'un tel ensemble motopropulseur sur chacune des roues arrières 3,4 permet de s'affranchir d'un arbre de transmission vers la partie arrière du châssis 1 du véhicule.

On économise ainsi la masse liée à ce mécanisme de transmission.

Par ailleurs, chaque roue 3, 4 étant associée à un ensemble motopropulseur 100 indépendant placé de façon symétrique situé chacun à l'arrière du châssis 1 du véhicule comme illustré sur les figures 1 et 2, ceci offre l'avantage d'une part, de libérer de l'espace entre les deux roues 3, 4 et d'autre part, de libérer également de l'espace à l'avant du véhicule.

En effet, on supprime tout mécanisme de différentiel entre les roues et tout berceau destiné à supporter un moteur central, ce qui permet encore de limiter la masse du véhicule.

Avec un tel ensemble motopropulseur 100, il ressort que le nombre de pièces impliquées dans l'entraînement d'une roue particulière est fortement diminué.

L'ensemble motopropulseur 100 intègre, en effet, un bras de suspension associé à la roue au carter 300 du moteur 101, le porte moyeu et le moyeu au carter de réduction 126 et le carter 300 du moteur 101 est conformé pour fixer le système de suspension 6 que ce soit l'amortisseur 7 ou bien une barre anti devers.

Dans une variante de réalisation, le carter de réduction 126 est venu de moulage avec le carter moteur 300.

On obtient un ensemble monobloc très compact et notamment une liaison au sol assurée par un système de suspension très compact.

Par ailleurs, le moteur 101 contenu dans le bras de suspension 300 dissipe une puissance thermique.

L'environnement du bras de suspension formé par le carter moteur 300 étant à une température de l'ordre de 35°C, il est nécessaire d'ajouter au moteur 101 un système de refroidissement adapté, afin de ne pas dépasser les températures admissibles de ses éléments.

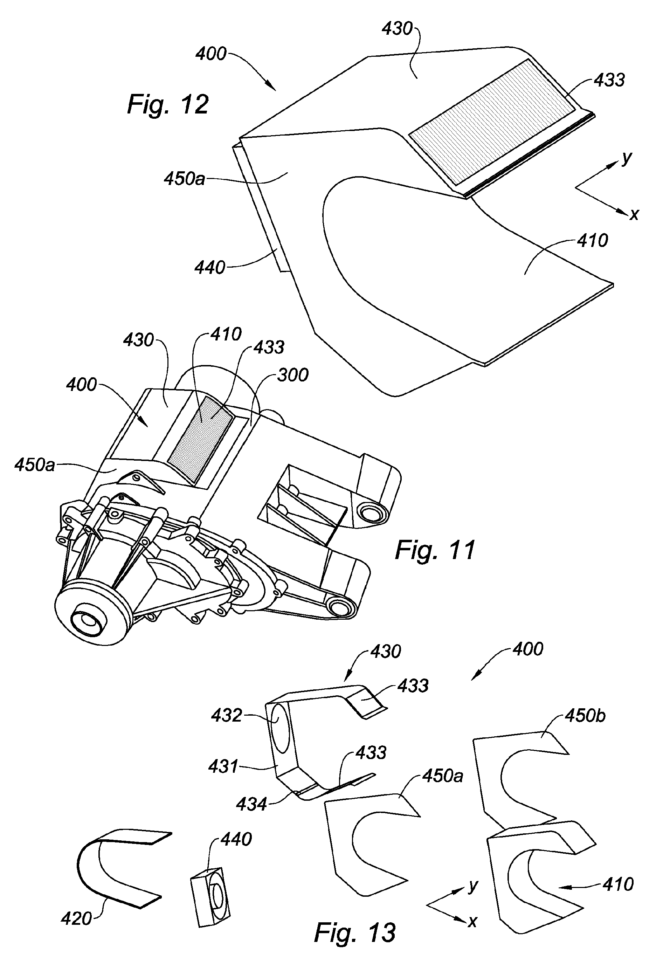

Ainsi, en référence aux figures 11 à 13, le carter moteur 300 est équipé d'un système de refroidissement 400 de l'ensemble moto propulseur 100 et, plus particulièrement, du moteur électrique 101.

Le système de refroidissement 400 est configuré de sorte d'entourer la circonférence du moteur 101 lorsqu'il est monté sur le carter moteur 300.

Il présente une section de forme générale en C, la concavité du C étant adaptée pour recevoir la partie du carter moteur 300 qui reçoit le moteur 101.

Avantageusement, un tel système de refroidissement 400 comprend des moyens de refroidissement à air du moteur électrique 101.

Un tel système de refroidissement 101 comprend ainsi, une série d'ailettes de refroidissement 410 adaptées pour diriger l'air sur la circonférence du carter moteur formant bras de suspension correspondant à la périphérie du rotor et du stator du moteur 101.

Plus précisément, elles sont configurées pour diriger l'air de refroidissement transversalement à l'axe du moteur 101 et plus particulièrement à celui du rotor 105 et du stator 104 du moteur 101.

Les ailettes 410 sont fixées les unes aux autres et espacées les unes des autres, l'espacement inter-ailettes définissant les passages d'air du système de refroidissement à air 400.

Ces ailettes 410 sont également, destinées à augmenter la surface d'échange de chaleur nécessaire à un refroidissement efficace du moteur 101.

Chacune de ces ailettes 410 comprend, ainsi, une section de forme générale en C et est disposée sur le carter moteur 300 transversalement à l'axe Y, c'est-à-dire autour de la circonférence du rotor 105 et du stator 104 du moteur 101.

L'espacement et le nombred'ailettes 410 sont adaptés pour ne pas avoir de pertes de charges importantes.

La série d'ailettes de refroidissement 410 est fixée à une semelle 420 de forme complémentaire montée sur la circonférence externe de la série d'ailettes 410.

Cette semelle est montée sur un carter externe de protection 430 des ailettes 410, de section en forme générale de U droit renversé de 90 degrés, dans la concavité duquel sont placées la semelle 420 et la série d'ailettes 410.

Un tel carter externe de protection 430 est adapté pour protéger les ailettes 410 dans les directions X et Z.

Comme illustré notamment à la figure 13, un tel carter externe de protection 430 comprend, sur sa base 431 du U, c'est à dire sa portion perpendiculaire à l'axe X, un orifice d'entrée d'air 432 traversant adapté pour recevoir un système de ventilation forcé 440 destiné à coopérer avec les ailettes 410 pour refroidir le moteur 101.

Il comprend, également, aux deux extrémités libres de ces deux branches respectives de U, deux orifices de sortie d'air 433 traversants dont la forme et les dimensions sont adaptées pour l'évacuation d'air chaud provenant du refroidissement du moteur 101.

Dans l'exemple non limitatif illustré sur la figure 13, de tels orifices 433 ont une forme carrée.

Comme illustré sur la figure 13 uniquement, le carter externe de protection 430 comprend, sur l'une et/ou l'autre de ces branches, un orifice 434 permettant d'évacuer l'eau susceptible d'entrer dans le système de refroidissement 400, cet orifice prenant, dans un exemple non limitatif la forme d'une fente s'étendant selon Y.

Comme précédemment évoqué, le dispositif de ventilation forcé 440 destiné à introduire de l'air dans les passages délimités par les ailettes 410 peut être monté sur le carter externe de protection 430 des ailettes 410 de refroidissement.

Un tel dispositif 440 est, dans un exemple non limitatif de la présente invention, un ventilateur.

Par ailleurs, un tel carter externe de protection 430 des ailettes 410 est associé à deux carters de protection 450a et 450b latéraux des ailettes 410 montés sur les deux extrémités latérales de la série d'ailettes 410.

Ces deux carters latéraux de protection 450a, 450b sont adaptés pour protéger les ailettes dans la direction Y.

Dans une variante de réalisation, les carters de protection externe et latéraux sont venus de moulage avec le carter moteur 300.

Dans une variante de réalisation, les carters de protection externe 430 et latéraux 450a, 450b sont venus de moulage avec le carter moteur 300.

Le système de refroidissement 400 de l'ensemble moto propulseur est mis en oeuvre de la façon suivante.

De l'air de refroidissement est introduit par le ventilateur 440 vers les passages définis par l'espacement inter-ailettes 410, ces passages permettent de diriger l'air de refroidissement de façon transversale au moteur 101 pour le refroidir, l'air étant dirigé perpendiculairement à la circonférence du rotor et du stator du moteur 101.

L'air chaud récupéré de la dissipation du moteur 101 à la surface du carter moteur au niveau du rotor 105 du moteur 101 est ensuite évacué par les orifices de sortie 433 du carter externe 430 du système de refroidissement 400.

Avec un tel système de refroidissement à air 400 et les ailettes 410 correspondantes, le refroidissement du moteur est homogène sur toute la longueur du rotor 105 dans la mesure où l'air de refroidissement est dirigé grâce aux ailettes 410 sur toute la longueur dudit rotor 105.

De plus, un tel système de refroidissement 400 favorise l'allègement du moteur en comparaison de système de refroidissement connus.

L'homme de l'art appréciera, par rapport aux véhicules de l'art antérieur, un véhicule offrant la possibilité de concilier les exigences relatives à la masse du véhicule et celles relatives à la gestion de l'énergie du véhicule.

Bien évidemment, l'invention ne se limite pas aux formes de réalisation décrites ci-dessus à titre d'exemples mais elle embrasse au contraire toutes les variantes possibles.

Ainsi, les formes et les dimensions des éléments de l'ensemble motopropulseur 100 selon l'invention sont non limitatives et dépendent du véhicule.

## Revendications

1. Ensemble motopropulseur (100) pour véhicule automobile comprenant une machine électrique tournante (101) destinée à entraîner une roue (3,4) d'un véhicule, un carter moteur (300) destiné à loger ladite machine électrique tournante (101), ladite machine électrique tournante comprenant au moins un rotor **caractérisé en ce que** le carter moteur (300) est adapté pour former un bras de suspension de ladite roue correspondante, mobile en rotation autour d'un axe parallèle et distinct de l'axe de rotation dudit rotor.

2. Ensemble motopropulseur (100) selon la revendication 1 **caractérisé en ce que** le carter moteur (300) comprend des moyens d'articulation (301,302) destinés à coopérer avec une tige (5) solidaire d'un châssis (1 ) du véhicule pour assurer le débattement de la roue (3,4).

3. Ensemble motopropulseur selon la revendication 2 **caractérisé en ce que** les moyens d'articulation (305,306) comprennent au moins un bras d'articulation présentant un orifice traversant capable de recevoir ladite tige (5).

4. Ensemble motopropulseur selon la revendication 1 **caractérisé en ce que** le carter moteur (300) est conformé de sorte à offrir des moyens de fixation à un système d'amortissement (6) associé à ladite roue (3,4).

5. Ensemble motopropulseur selon la revendication 4 **caractérisé en ce que** le carter moteur (300) comprend une ou plusieurs oreilles de fixation (301,302) comprenant un orifice traversant destiné à recevoir un élément de fixation avec un amortisseur.

6. Ensemble motopropulseur selon la revendication 1 **caractérisé en ce que** le carter moteur (300) comprend des moyens de fixation (311 ) à une barre anti devers.

7. Ensemble motopropulseur selon la revendication 1 **caractérisé en ce qu'**il comprend, en outre, un carter (126) de réduction pour loger un réducteur (102), ledit carter de moteur (300) étant adapté pour être fixé audit carter de réduction (126).

8. Ensemble motopropulseur selon la revendication 7 **caractérisé en ce que** le carter de réduction (126) forme un porte moyeu.

9. Ensemble motopropulseur selon la revendication 1 **caractérisé en ce qu'**il comprend, en outre, un connecteur (115) triphasé, le carter moteur (300) étant conformé de sorte à se fixer audit connecteur.

10. Ensemble motopropulseur selon la revendication 1 **caractérisé en ce qu'**il comprend, en outre, un frein de parking (117) et un moyen d'actionnement (103) dudit frein logés dans le carter du moteur (300).

11. Ensemble comprenant un châssis (1) et un essieu monté sur le châssis, ledit essieu comprenant un ensemble motopropulseur (100) selon l'une des revendications 1 à 10 et au moins une roue (3,4) destinée à être entraînée par ledit ensemble motopropulseur (100), le carter moteur (300) étant monté pivotant sur le châssis (1) du véhicule autour d'un axe de rotation parallèle et distinct de l'axe de rotation de la roue.

12. Ensemble selon la revendication 11 **caractérisé en ce que** la machine électrique tournante (101) est en prise directe avec la roue (3,4).

13. Ensemble selon la revendication 12 **caractérisé en ce que** chaque roue (3,4) est associée à un ensemble motopropulseur (100) indépendant.

14. Ensemble selon l'une des revendications 11 à 13 **caractérisé en ce que** un système de refroidissement à air (400) est monté sur le carter moteur (300).

15. Ensemble selon la revendication 14 **caractérisé en ce que** le système de refroidissement (400) comprend des moyens d'entrée d'air de refroidissement, une série d'ailettes de refroidissement (410) configurées de sorte de diriger l'air de refroidissement entrant transversalement au rotor (105) de la machine électrique tournante (101) et des moyens de sortie d'air chaud du système de refroidissement.

16. Véhicule automobile comprenant un ensemble motopropulseur (100) selon l'une des revendications 1 à 10.
